(19) Europäisches Patentamt

European Patent Office

Office européen des brevets

(11) **EP 4 198 081 B1**

(12) **EUROPEAN PATENT SPECIFICATION**

(45) Date of publication and mention of the grant of the patent:
**19.11.2025 Bulletin 2025/47**

(21) Application number: **21855924.3**

(22) Date of filing: **04.08.2021**

(51) International Patent Classification (IPC):
*C08K 7/04* (2006.01)   *C08L 67/03* (2006.01)
*C08L 101/00* (2006.01)   *C08K 3/013* (2018.01)
*B29C 48/00* (2019.01)   *C08L 67/02* (2006.01)
*C08K 7/14* (2006.01)   *C08L 69/00* (2006.01)

(52) Cooperative Patent Classification (CPC):
(C-Sets available)
**C08L 67/02;** C08K 2201/004        (Cont.)

(86) International application number:
**PCT/JP2021/028997**

(87) International publication number:
**WO 2022/034845 (17.02.2022 Gazette 2022/07)**

(54) **INORGANIC MATERIAL-REINFORCED THERMOPLASTIC POLYESTER RESIN COMPOSITION AND METHOD FOR PRODUCING SAME**

MIT ANORGANISCHEM MATERIAL VERSTÄRKTE THERMOPLASTISCHE POLYESTERHARZZUSAMMENSETZUNG UND VERFAHREN ZUR HERSTELLUNG DAVON

COMPOSITION DE RÉSINE DE POLYESTER THERMOPLASTIQUE RENFORCÉE PAR UN MATÉRIAU INORGANIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2020 JP 2020135727**

(43) Date of publication of application:
**21.06.2023 Bulletin 2023/25**

(73) Proprietor: **TOYOBO MC Corporation Osaka-shi, Osaka 530-0001 (JP)**

(72) Inventors:
• **SHIMIZU, Takahiro Otsu-shi, Shiga 520-0292 (JP)**
• **AYUZAWA, Yoshitaka Otsu-shi, Shiga 520-0292 (JP)**

(74) Representative: **Müller-Boré & Partner Patentanwälte PartG mbB Friedenheimer Brücke 21 80639 München (DE)**

(56) References cited:
**WO-A1-2015/008831        WO-A1-2019/217680
JP-A- 2008 214 558        JP-A- 2013 159 732
JP-B2- 5 396 690        JP-B2- 6 657 662**

• **ZHANG ZHONGHOU, FENG LI, LI YADONG, WANG YINTAO, YAN CHUNMIAN: "Nonisothermal crystallization kinetics of poly(butylene terephthalate)/poly(ethylene terephthalate)/glass fiber composites", POLYMER COMPOSITES, SOCIETY OF PLASTICS ENGINEERS, INC., US, vol. 36, no. 3, 1 March 2015 (2015-03-01), US , pages 510 - 516, XP055908500, ISSN: 0272-8397, DOI: 10.1002/pc.22966**

(52) Cooperative Patent Classification (CPC): (Cont.)

C-Sets
**C08L 67/02, C08K 7/14, C08L 67/02, C08L 67/02;
C08L 67/02, C08K 7/14, C08L 67/02, C08L 69/00**

**Description**

TECHNICAL FIELD

The present invention relates to an inorganic material-reinforced thermoplastic polyester resin composition containing a thermoplastic polyester resin and an inorganic reinforcing material such as reinforcing glass fiber.

BACKGROUND ART

Generally, due to excellence in mechanical properties, heat resistance, chemical resistance, polyester resins have been widely used for automobile parts, electric and electronic parts, household utensils. In particular, it is known that polyester resin compositions reinforced with an inorganic reinforcing material such as glass fiber are greatly improved in rigidity, strength and heat resistance, and particularly the rigidity is improved in proportion to the amount of the inorganic reinforcing material added.

However, with increase in addition of an inorganic reinforcing material such as glass fiber, the inorganic reinforcing material such as glass fiber tends to float on the surface of a molding, possibly resulting in deterioration of the appearance of the molding, particularly surface gloss, which may drastically impair the commercial value. For example, among the parts for vehicles, especially, the blowing fins of air conditioners are required to have good mechanical properties and appearance. From the viewpoint of design, the blowing fins tend to be longer and thinner, which requires further higher strength and rigidity, and good appearance without floating of glass fibers.

In Patent Literature 1, a resin composition capable of suppressing glass floating even in a highly rigid material containing 50 mass% or more of glass fiber through control of the solidification (crystallization) rate of the resin composition in a mold is described. However, the above-mentioned method is effective only for a shape that allows relatively easy flow, and a long and thin-walled molding, for example, a molding having a thickness of less than 2 mm and a length of more than 200 mm made of the composition of the invention has caused notable floating of glass fibers, having resulted in poor appearance.

CITATION LIST

PATENT LITERATURE

PTL 1: JP 5 396 690 B2

SUMMARY OF INVENTION

TECHNICAL PROBLEM

In order to increase the fluidity of the resin composition, the molecular weight of the resin component may be reduced to lower the viscosity, or the content of reinforcing material may be reduced. However, the mechanical strength decreases in parallel, resulting in a trade-off between fluidity and mechanical strength.

An object of the present invention is to provide a long and thin molding of an inorganic material-reinforced thermoplastic polyester resin composition containing a thermoplastic polyester resin and an inorganic reinforcing material such as reinforcing glass fiber, excellent in appearance while maintaining proper mechanical properties such as rigidity and impact resistance.

SOLUTION TO PROBLEM

Through extensive study to solve the problem, the present inventors have completed the present invention based on the founding that a resin composition containing a large amount of inorganic reinforcing material such as glass fiber having a fiber length within a predetermined range may maintain the mechanical strength and have improved fluidity, even with a short fiber length.

In other words, the present invention is as follows.

[1] An inorganic material-reinforced thermoplastic polyester resin composition, comprising 20 to 55 parts by mass of a polybutylene terephthalate resin (A), 1 to 30 parts by mass of a polyethylene terephthalate resin (B), 3 to 30 parts by mass of a semicrystalline resin and/or amorphous resin (C), and 25 to 65 parts by mass of an inorganic reinforcing material (D),

wherein the inorganic reinforcing material (D) in the inorganic material-reinforced thermoplastic polyester resin composition has a number average fiber length Ln of 100 to 500 $\mu$m,

wherein the inorganic material-reinforced thermoplastic polyester resin composition has a flow length of 80 mm or more, and a crystallization temperature during cooling (Tc2M) as measured by differential scanning calorimetry (DSC) that satisfies: $160°C \leq Tc2M < 185°C$, and

wherein the semicrystalline resin and/or amorphous resin (C) is at least one of the group consisting of a copolymerized polybutylene terephthalate, a copolymerized polyethylene terephthalate, and a polycarbonate-based resin.

[2] The inorganic material-reinforced thermoplastic polyester resin composition according to item [1], wherein the semicrystalline resin and/or amorphous resin (C) is one or more selected from the group consisting of a terephthalic acid//ethylene glycol/neopentyl glycol copolymer, a terephthalic acid//ethylene glycol/1,2-propane diol copolymer, and a terephthalic acid/isophthalic acid//ethylene glycol/neopentyl glycol copolymer.

[3] The inorganic material-reinforced thermoplastic polyester resin composition according to item [1] or [2], satisfying the following relation:

$$Tc2N - Tc2M \geq 10°C$$

wherein the crystallization temperature during cooling of a polyester resin composition excluding only the semicrystalline resin and/or amorphous resin (C) in the inorganic material-reinforced thermoplastic polyester resin composition is represented by Tc2N (°C) as measured by differential scanning calorimetry (DSC).

[4] The inorganic material-reinforced thermoplastic polyester resin composition according to any of items [1] to [3], wherein a weight average molecular weight Mw and a number average molecular weight Mn of the resin component of the inorganic material-reinforced thermoplastic polyester resin composition satisfy: $Mw/Mn \leq 5$.

[5] The inorganic material-reinforced thermoplastic polyester resin composition according to any of items [1] to [4], wherein the content of inorganic reinforcing material (D) in the inorganic material-reinforced thermoplastic polyester resin composition is 40 to 60 mass%.

[6] The inorganic material-reinforced thermoplastic polyester resin composition according to any of items [1] to [5], wherein a number average fiber length Ln and a weight average fiber length Lw of the inorganic reinforcing material (D) in the inorganic material-reinforced thermoplastic polyester resin composition satisfy:

$$Lw/Ln \leq 2.0.$$

[7] A production method of the inorganic material-reinforced thermoplastic polyester resin composition according to any of items [1] to [6], comprising using a twin-screw extruder having a plurality of side feeders and separately feeding the same type of inorganic reinforcing material from the side feeders.

ADVANTAGEOUS EFFECTS OF INVENTION

According to the present invention, a long and thin molding of an inorganic material-reinforced thermoplastic polyester resin composition excellent in fluidity and appearance while maintaining proper mechanical properties such as rigidity and impact resistance can be produced.

BRIEF DESCRIPTION OF DRAWINGS

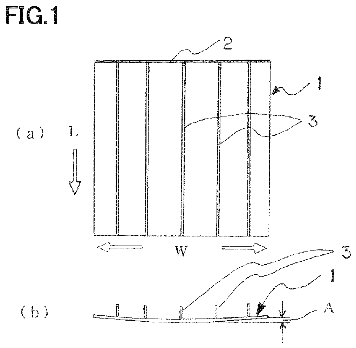

[Fig. 1] Fig. 1 is a schematic top view (a) and a schematic side view (b) which schematically showing a molding molded for evaluation of warp deformation as an example.

DESCRIPTION OF EMBODIMENTS

The embodiment of the present invention is described as follows.

Polybutylene terephthalate resin (A) in the present invention is a main component resin having a highest content among all the polyester resins in the resin composition of the present invention. Polybutylene terephthalate resin (A) is not particularly limited, and a homopolymer formed of terephthalic acid and 1,4-butanediol is mainly used. Further, based on 100 mol% in total of all the dicarboxylic acid components (or 100 mol% in total of all the glycol components), about up to 5 mol% of other components may be copolymerized within a range where moldability, crystallinity, surface gloss, etc., are not impaired.

For example, the reduced viscosity (0.1 g of a sample is dissolved in 25 mL of a mixed solvent of phenol/tetrachloroethane (mass ratio: 6/4) for measurement at 30°C with use of an Ubbelohde viscosity tube) is preferably within the range of 0.4 to 1.2 dL/g, more preferably 0.5 to 0.8 dL/g. At a reduced viscosity of less than 0.4 dL/g, the toughness tends to decrease, and at a reduced viscosity of more than 1.2 dL/g, due to the decreased fluidity, the intended good appearance of a molding may not be obtained.

The content of each component (amount compounded) in the inorganic material-reinforced thermoplastic polyester resin composition of the present invention is represented by content (part by mass) relative to 100 parts by mass of the total of polybutylene terephthalate resin (A), polyethylene terephthalate resin (B), semicrystalline resin and/or amorphous resin (C), and inorganic reinforcing material (D).

The content of polybutylene terephthalate resin (A) is 20 to 55 parts by mass, preferably 20 to 50 parts by mass, and more preferably 22 to 45 parts by mass.

Polyethylene terephthalate resin (B) of the present invention is a polyethylene terephthalate resin (PET) as typical thermoplastic polyester resin produced by polycondensation of terephthalic acid and ethylene glycol. The reduced viscosity of PET (0.1 g of a sample is dissolved in 25 mL of a mixed solvent of phenol/tetrachloroethane (mass ratio: 6/4) for measurement at 30°C with use of an Ubbelohde viscosity tube) is preferably in the range of 0.4 to 1.0 dL/g, more preferably 0.5 to 0.9 dL/g. At a reduced viscosity of less than 0.4 dL/g, the toughness tends to decrease, and at a reduced viscosity of more than 1.0 dL/g, the fluidity tends to decrease, so that the intended good appearance of a molding may not be obtained.

The content of polyethylene terephthalate resin (B) is 1 to 30 parts by mass, preferably 1 to 25 parts by mass, and more preferably 3 to 20 parts by mass.

Semicrystalline resin and/or amorphous resin (C) in the inorganic material-reinforced thermoplastic polyester resin composition of the present invention is at least one of the group consisting of a copolymerized polybutylene terephthalate, a copolymerized polyethylene terephthalate, and a polycarbonate-based resin as well as is compatible with polybutylene terephthalate resin (A) and polyethylene terephthalate resin (B) and capable of delaying crystallization.

The content of semicrystalline resin and/or amorphous resin (C) in the inorganic material-reinforced thermoplastic polyester resin composition of the present invention is 3 to 30 parts by mass, preferably 3 to 25 parts by mass, and more preferably 8 to 15 parts by mass. At a content of less than 3 parts by mass, the appearance defects caused by floating of glass fiber become to stand out, and at a content of more than 30 parts by mass, the molding cycle is unfavorably prolonged, though the appearance of a molding is improved. In the case where two or more types of resins are used as semicrystalline resin and/or amorphous resin (C), the content is the amount in total.

The copolymerized polybutylene terephthalate resin is, for example, a resin that contains 80 mol% or more of 1,4-butanediol and 120 to 180 mol% in total of terephthalic acid and 1,4-butanediol, based on 100 mol% in total of all the acid components and 100 mol% in total of all the glycol components. As a copolymerization component, at least one selected from the group consisting of isophthalic acid, sebacic acid, adipic acid, trimellitic acid, 2,6-naphthalenedicarboxylic acid, ethylene glycol, diethylene glycol, neopentyl glycol, 1,4-cyclohexanedimethanol, 1,2-propanediol, 1,3-propanediol, and 2-methyl-1,3-propanediol may be contained. In particular, isophthalic acid is preferably used as the copolymerization component. Based on 100 mol% in total of all the acid components constituting copolymerized polybutylene terephthalate, the copolymerization ratio is preferably 20 to 80 mol%, more preferably 20 to 60 mol%. With a copolymerization ratio of less than 20 mol%, a satisfactory appearance may not be produced due to poor transferability to a mold, while with a copolymerization amount of more than 80 mol%, lowering of molding cycle and lowering of mold releasability may be caused.

As a measure of the molecular weight of copolymerized polybutylene terephthalate, the reduced viscosity (0.1 g of a sample is dissolved in 25 mL of a mixed solvent of phenol/tetrachloroethane (mass ratio: 6/4) for measurement at 30°C with use of an Ubbelohde viscosity tube) is preferably 0.4 to 1.5 dL/g, more preferably 0.4 to 1.3 dL/g, though being slightly different depending on the specific copolymerization composition. At a reduced viscosity of less than 0.4 dL/g, the toughness tends to decrease, and at a reduced viscosity of more than 1.5 dL/g, the fluidity tends to decrease.

The copolymerized polyethylene terephthalate is a resin that contains 40 mol% or more of ethylene glycol and 80 to 180 mol% in total of terephthalic acid and ethylene glycol, based on 100 mol% in total of all the acid components and 100 mol% in total of all the glycol components. As a copolymerization component, at least one selected from the group consisting of isophthalic acid, sebacic acid, adipic acid, trimellitic acid, 2,6-naphthalenedicarboxylic acid, diethylene glycol, neopentyl glycol, 1,4-cyclohexanedimethanol, 1,4-butanediol, 1,2-propanediol, 1,3-propanediol, and 2-methyl-1,3-propanediol may be contained, which is preferably amorphous. **In** particular, neopentyl glycol or a combination of neopentyl glycol and isophthalic acid is preferably used from the viewpoint of various characteristics as copolymerization component. It is preferable that the content of 1,4-butanediol as the copolymerization component be 20 mol% or less.

Based on 100 mol% in total of all the glycol components constituting the copolymerized polyethylene terephthalate, the copolymerization ratio of neopentyl glycol is preferably 20 to 60 mol%, more preferably 25 to 50 mol%.

Based on 100 mol% in total of all the acid components constituting copolymerized polyethylene terephthalate, the copolymerization ratio of isophthalic acid is preferably 20 to 60 mol%, more preferably 25 to 50 mol%.

As a measure of the molecular weight of copolymerized polyethylene terephthalate, the reduced viscosity (0.1 g of a sample is dissolved in 25 mL of a mixed solvent of phenol/tetrachloroethane (mass ratio: 6/4) for measurement at 30°C with use of an Ubbelohde viscosity tube) is preferably 0.4 to 1.5 dL/g, more preferably 0.4 to 1.3 dL/g, though being slightly different depending on the specific copolymerization composition. At a reduced viscosity of less than 0.4 dL/g, the toughness tends to decrease, and at a reduced viscosity of more than 1.5 dL/g, the fluidity tends to decrease.

It is preferable that semicrystalline resin and/or amorphous resin (C) be at least one or more selected from the group consisting of a terephthalic acid//ethylene glycol/neopentyl glycol copolymer, a terephthalic acid//ethylene glycol/1,2-propane diol copolymer, and a terephthalic acid/isophthalic acid//ethylene glycol/neopentyl glycol copolymer. Here, "//" between each of the constituent components separates an acid component from a glycol component, and "/" separates constituent components in acid components or glycol components.

It is preferable that the polycarbonate resin for use in the present invention has high fluidity, in particular. Ones having a melt volume rate (unit: $cm^3/10$ min) measured under a load of 1.2 kg at 300°C of 20 to 100 are preferably used, and the melt volume rate is more preferably 25 to 95, still more preferably 30 to 90. If one having a melt volume rate of less than 20 is used, the fluidity is significantly reduced, so that a decrease in strand stability and deterioration of moldability may be caused in some cases. At a melt volume rate of more than 100, deterioration of physical properties may be caused due to too low a molecular weight, and a problem such as gas generation tends to be caused by decomposition.

Examples of the inorganic reinforcing material (D) in the present invention include talc in a tabular crystal state, mica, unbaked clays, unspecified or spherical calcium carbonate, baked clay, silica, glass beads, a generally used wallastonite and needle wallastonite, glass fiber, carbon fiber, whiskers of aluminum borate and potassium titanate, and milled fiber as short glass fiber having an average fiber diameter of about 4 to 20 $\mu$m and a cut length of about 35 to 300 $\mu$m, though not being limited thereto. In terms of the appearance of a molding, talc and wallastonite are most excellent, and in terms of improvement in the strength and rigidity, glass fiber is most excellent. One of these inorganic reinforcing materials may be used alone, or two or more thereof may be used in combination. In the present invention, glass fiber is particularly preferred.

Examples of the glass fiber for use as inorganic reinforcing material (D) of the present invention include a fiber in filament state produced by melt spinning of glass such as E glass (electrical glass), C glass (chemical glass), A glass (alkali glass), S glass (high strength glass) and alkali-resistant glass. A very common glass fiber having an average fiber diameter of about 4 to 50 $\mu$m and a cut length of about 3 to 6 mm may be used. A glass fiber having a circular cross-section or a non-circular cross-section may be used. Examples of the glass fiber having a non-circular cross-section include ones having a cross-section perpendicular to the length direction of the fiber in an approximately elliptical shape, an approximately oval shape, or an approximately cocoon-like shape, which has a flatness of preferably 1.3 to 8. The flatness is defined as follows. A rectangle having the smallest area, which circumscribes a cross-section perpendicular to the longitudinal direction of the glass fiber, is assumed. The major diameter is the length of the long side of the rectangle, and the minor diameter is the length of the short side. The ratio of major diameter/minor diameter is the flatness. The thickness of the glass fiber is not particularly limited, and one having a minor diameter of 1 to 20 $\mu$m and a major diameter of about 2 to 100 $\mu$m may be used. One of these glass fibers may be used alone, or two or more thereof may be used in combination.

As the glass fiber, those pretreated with a coupling agent such as an organic silane compound, an organic titanium compound, an organic borane compound and an epoxy compound may be preferably used. The inorganic material-reinforced thermoplastic polyester resin composition into which a glass fiber treated with a coupling agent is compounded is preferred, because a molding excellent in mechanical properties and appearance properties can be produced. Further, other inorganic reinforcing material without treatment with a coupling agent may be added afterwards for use.

The content of inorganic reinforcing material (D) in the inorganic material-reinforced thermoplastic polyester resin composition of the present invention is 25 to 65 parts by mass. The lower limit of the content of inorganic reinforcing material (D) is preferably 30 parts by mass, more preferably 33 parts by mass, still more preferably 35 parts by mass, and particularly preferably 40 parts by mass. The upper limit of inorganic reinforcing material (D) is preferably 60 parts by mass, more preferably 57 parts by mass, and still more preferably 55 parts by mass.

The content of inorganic reinforcing material (D) in the inorganic material-reinforced thermoplastic polyester resin composition is preferably 40 to 60 mass%.

In the inorganic material-reinforced thermoplastic polyester resin composition of the present invention, a transesterification inhibitor may be used depending on the purpose, within a range where the properties are not impaired. As the name implies, the transesterification inhibitor is a stabilizer that prevents the transesterification reaction of a polyester resin. In an alloy of polyester resins alone, transesterification occurs to not a small extent due to heat history, no matter how optimized the production conditions are. If it occurs to a very large extent, the desired characteristics of the alloy cannot be obtained. In particular, transesterification between polybutylene terephthalate and polycarbonate often occurs, and in that case, the crystallinity of polybutylene terephthalate is significantly reduced, which is not preferable.

As the transesterification inhibitor, a phosphorus compound having a catalyst deactivation effect on the polyester resin may be preferably used, and for example, "ADEKA STAB AX-71" manufactured by ADEKA Corporation may be used.

The content of the transesterification inhibitor for use in the present invention is preferably 0.05 to 2 parts by mass, more preferably 0.1 to 1 part by mass. With a content of less than 0.05 parts by mass, the desired transesterification prevention performance may not be exhibited in many cases. To the contrary, even with an addition of more than 2 parts by mass, the effect is not improved so much, and may cause increases of gas in some cases.

The inorganic material-reinforced thermoplastic polyester resin composition of the present invention has a crystallization temperature during cooling Tc2M in a range of 160°C or more and less than 185°C as measured by differential scanning calorimetry (DSC). Tc2M is the top temperature of crystallization peak of a thermogram obtained by heating to 300°C at a heating rate of 20°C/min under a nitrogen stream, holding the temperature for 5 minutes, and then lowering the temperature to 100°C at a rate of 10°C/min, using a differential scanning calorimeter (DSC). At Tc2M of 185°C or more, crystallization rate of the polyester resin composition increases, so that crystallization in the mold occurs quickly. The propagation speed of the injection pressure, therefore, tends to decrease particularly in a composition containing a large amount of inorganic reinforcing materials. As a result, due to insufficient adhesion between an injected product and the mold and the effect of shrinkage during crystallization, the inorganic reinforcing materials such as glass fiber stand out on the surface of the molding, which is so-called as glass fiber floating, to deteriorate the appearance of the molding. In that case, a method of delaying solidification of the molding by raising the mold temperature to a high temperature of 120 to 130°C may be considered. Although the surface gloss and appearance are improved in the central portion where the injection pressure is high in the mold by the method, defects such as glass fiber floating are likely to occur in the end portion where injection pressure is hardly applied, so that it is difficult to obtain a uniformly good appearance. Further, since the temperature of the molding taken out from the mold is high, warp of the molding increases.

In contrast, in the case where Tc2M is less than 160°C, the crystallization rate becomes too slow, and the slow crystallization may cause mold release failure due to sticking to the mold or deformation during extrusion in some cases. In addition, since the pressure during molding allows the resin to easily penetrate deeper into the texture, the texture may deviate during shrinkage of the resin in the mold or during mold release, resulting in non-uniform depth of the texture. It is therefore difficult to obtain a good textured appearance. Further, extension of the cooling time for sufficient crystallization prolongs the cycle time of molding, so that productivity is lowered. In consideration of these concerns during molding, the inorganic material-reinforced thermoplastic polyester resin composition of the present invention is adjusted to have an optimum Tc2M, so that a good appearance and moldability may be obtained even at a mold temperature of 100°C or less.

Accordingly, a good surface appearance may be obtained by molding the inorganic material-reinforced thermoplastic polyester resin composition of the present invention, at a mold temperature of about 90°C in a wide range of injection rate under a wide range of molding conditions. In particular, an extremely jet-black molding having a uniform appearance without texture irregularity can be produced using a textured mold.

When the crystallization temperature during cooling of the inorganic material-reinforced thermoplastic polyester resin composition of the present invention as measured by differential scanning calorimetry (DSC) is expressed by Tc2M (°C), and the crystallization temperature during cooling of a polyester resin composition excluding only semicrystalline resin and/or amorphous resin (C) in the inorganic material-reinforced thermoplastic polyester resin composition as measured by differential scanning calorimetry (DSC) is expressed by Tc2N (°C), it is preferable that the following relation be satisfied.

$$\mathrm{Tc2N-Tc2M \geq 10°C}$$

Tc2N-Tc2M is preferably 13°C or more, more preferably 15°C or more, still more preferably 18°C or more, and particularly preferably 21°C or more. The upper limit is about 30°C in the present invention, though not particularly specified.

The important factors involved in the temperature Tc2M (°C) in the inorganic material-reinforced thermoplastic polyester resin composition are resin (B) and resin (C). Among them, resin (C) is most important because it has compatibility with resin (B) and resin (A) close to molecular dispersion and may impart a wide range of physical properties from amorphous to crystalline state depending on the resin composition. Therefore, by compounding an optimum amount of resin (C), Tc2M of the inorganic material-reinforced thermoplastic polyester resin composition may be controlled, so that a good appearance of a molding can be produced. Since the warp deformation of the molding may be also achieved, resin (C) is extremely important for good appearance and low warp.

Number average fiber length Ln of inorganic reinforcing material (D) in the inorganic material-reinforced thermoplastic polyester resin composition in the present invention is 100 to 500 μm, preferably 120 to 480 μm, more preferably 150 to 480 μm, and still more preferably 180 to 470 μm. With number average fiber length Ln in the above range, the mechanical strength is not so affected by the fiber length, and a molding having an excellent balance between mechanical properties and fluidity can be produced. On the other hand, with Ln of less than 100 μm, the mechanical strength decreases. With Ln of larger than 500 μm, the fluidity is lowered, and the anisotropy of the shrinkage rate at the time of molding becomes remarkable, so that the warp of the molding increases.

Further, it is preferable that number average fiber length Ln and weight average fiber length Lw of inorganic reinforcing material (D) of the inorganic material-reinforced thermoplastic polyester resin composition in the present invention satisfy Lw/Ln≤2.0. Lw/Ln is more preferably 1.8 or less, and still more preferably 1.5 or less. The lower limit of Lw/Ln is not particularly limited, and is theoretically 1.0 or more. With Lw/Ln larger than 2.0, the mechanical properties, appearance, and low warp tend to be slightly deteriorated.

Further, it is preferable that the histogram of the fiber length of inorganic reinforcing material (D) of the inorganic material-reinforced thermoplastic polyester resin composition in the present invention has one peak. In the case where there exist two or more peaks, the uniform dispersibility of the inorganic reinforcing material in the resin is lowered, so that the warp deformation tends to be large, in addition to deterioration of the mechanical properties.

Further, the flow length of the inorganic material-reinforced thermoplastic polyester resin composition of the present invention is 80 mm or more. The flow length is preferably 90 mm or more, more preferably 100 mm or more, still more preferably 110 mm or more, and furthermore preferably 120 mm or more. The flow length is measured by the method described in following Examples (1 mm t flow length). With a flow length within the above range, even in the case where molding is performed not at high molding temperature, the mold may be well filled and defective products having sink marks and short shots are not produced. Further, since high molding temperature is not required, the cooling time after molding may be shortened to shorten the molding cycle, so that a molding may be manufactured at low cost. On the other hand, with a flow length less than 80 mm, the fluidity of the resin composition decreases, and the flow rate in the mold becomes slow, so that it becomes difficult to fill the entire mold with the resin material. As a result, short shots and sink marks occur in a molding to be molded. The upper limit of the flow length of the inorganic material-reinforced thermoplastic polyester resin composition of the present invention is about 500 mm, though not particularly limited.

The inorganic material-reinforced thermoplastic polyester resin composition of the present invention may contain various known additives on an as needed basis, within a range where properties in the present invention are not impaired. Examples of the known additives include a colorant such as a pigment, a mold release agent, a heat resistance stabilizer, an antioxidant, an ultraviolet absorber, a light stabilizer, a plasticizer, a modifier, an antistatic agent, a flame retardant, and a dye. These various additives may be contained in a total amount of up to 5 mass%, based on 100 mass% of the inorganic material-reinforced thermoplastic polyester resin composition. In other words, it is preferable that the total amount of (A), (B), (C), and (D) be 95 to 100 mass%, in 100 mass% of the inorganic material-reinforced thermoplastic polyester resin composition.

Examples of the mold release agent include a long-chain fatty acid or an ester thereof and a metal salt thereof, an amide compound, a polyethylene wax, silicone, and polyethylene oxide. As the long-chain fatty acid, one having 12 or more carbon atoms is particularly preferred, and examples thereof include stearic acid, 12-hydroxystearic acid, behenic acid, and montanic acid. A part or the whole of carboxylic acid may be esterified with monoglycol or polyglycol, or may form a metal salt. Examples of the amide compound include ethylene bis-terephthalamide and methylene bis-stearylamide. These mold release agents may be used alone or as a mixture.

A production method of the inorganic material-reinforced thermoplastic polyester resin composition of the present invention includes mixing each of the components such as polybutylene terephthalate resin (A), polyethylene terephthalate resin (B), semicrystalline resin and/or amorphous resin (C), and inorganic reinforcing material (D), and on an as needed basis, various stabilizers, a mold release agent and a pigment, and melt-kneading the mixture. The melt-kneading method may be any method known to those skilled in the art with use of a single-screw extruder, a twin-screw extruder, a pressurizing kneader, a Banbury mixer, or the like. In particular, use of a twin-screw extruder is preferred. Typical melt-kneading conditions include a cylinder temperature of twin-screw extruder of 240 to 290°C, and a kneading time of 2 to 15 minutes. Alternatively, only the inorganic reinforcing material or, on an as needed basis, other components may be supplied from a side feeder and melt-kneaded. For a screw element, a combination of a reverse disc and a kneading disc between the main feeder and the side feeder to melt the polyester resin by applying high shear is preferred. Further, it is preferable that the molten polyester resin be sent in a forward flight to be joined to the inorganic reinforcing material supplied from the side feeder for kneading in a low shear state. Subsequently, the molten polyester resin composition is extruded in a low shear state from the die and cooled with water to produce a strand of the inorganic material-reinforced thermoplastic polyester resin composition. The resulting polyester resin composition is vacuum dried, for example, under conditions at 80°C for 12 hours, and then molded to produce a molding.

Further, in the present invention, side feeders may be provided at a plurality of places. The fiber length of the inorganic reinforcing material supplied from the upstream side feeder is shorter than the fiber length of the inorganic reinforcing material supplied from the downstream side feeder. By changing the amount of the inorganic reinforcing material supplied to each side feeder, the fiber length in the composition is easily adjusted to a predetermined range without changing other extrusion conditions. Compared with the method of supplying from the original feeder (main feeder) and the side feeder, the above method is preferred because it is easier to control the fiber length distribution for adjustment to a single distribution (one histogram) of the fiber length.

The position of the side feeder that supplies the inorganic reinforcing material may be optionally adjusted according to the aim such as the amount of the reinforcing material, the ease of mixing with the resin, and the fiber length of the reinforcing material. In the production of the inorganic material-reinforced thermoplastic polyester resin composition of the present invention, it is preferable that a first side feeder be provided behind a quarter of the distance from the main feeder to the die from the main feeder, such that the fiber length is not shortened too much. Further, it is preferable that the number of barrels between the side feeders (between the first side feeder and the second side feeder) be adjusted within 5 barrels for easy adjustment of the fiber length distribution to a single dispersion (one histogram).

In other words, it is a preferable aspect of production method of the inorganic material-reinforced thermoplastic polyester resin composition of the present invention that the same type of inorganic reinforcing material is dividedly fed from a plurality of side feeders. On this occasion, it is preferable that the inorganic reinforcing material be fed only from a plurality of side feeders, without being fed from the main feeder.

Number average molecular weight (Mn) of the resin component contained in the inorganic material-reinforced thermoplastic polyester resin composition of the present invention is preferably 5000 or more in terms of excellent mechanical properties of the molding. With Mn less than 5000, a problem is caused that the mechanical strength is lowered. Further, Mn is more preferably 7000 or more, still more preferably 10000 or more. From the viewpoint of moldability, Mn is preferably 100000 or less. With Mn more than 100000, the moldability is lowered, so that a problem is caused that the appearance of a molding is poor. Mn is more preferably 90000 or less, and still more preferably 80000 or less. In order to control the number average molecular weight within a predetermined range, the set temperature of the extruder is preferably 270°C or less, more preferably 265°C or less. The screw rotation speed is preferably 500 rpm or less, more preferably 400 rpm or less.

The number average molecular weight may be measured by gel permeation chromatography (GPC) as follows. A sample is dissolved in a mixed solvent of hexafluoroisopropanol (HFIP) and chloroform, and the sample solution filtered through a membrane filter is passed through columns including two TSKGel SuperHM-H and TSKGel SuperH2000 (TOSOH) connected in series. The number average molecular weight is a relative value to the molecular weight of standard polystyrene. The weight average molecular weight to be described later is also measured by the same method.

It is preferable that dispersity (Mw/Mn) represented by the ratio of weight average molecular weight (Mw) to number average molecular weight (Mn) of the resin component contained in the inorganic material-reinforced thermoplastic polyester resin composition of the present invention be 5 or less. The dispersity is more preferably 4.8 or less, and still more preferably 4.5 or less. The lower limit of the dispersity is not particularly limited, and is theoretically 1.0 or more. With a dispersity of more than 5, gelation occurs to cause a possible bad effect on the fluidity, and in some cases, the mechanical properties such as toughness tend to deteriorate due to resulting relatively increased amount of low molecular weight components.

Examples

The present invention will be more specifically described with reference to Examples, though the present invention is not limited thereto.

The characteristics and physical properties shown in the following Examples and Comparative Examples were measured by the following methods, respectively.

(1) Reduced viscosity of polyester resin (dL/g):
In 25 mL of a mixed solvent of phenol/tetrachloroethane (mass ratio: 6/4), 0.1 g of a sample was dissolved and measured at 30°C using an Ubbelohde viscosity tube.
(2) Bending strength:
The measurement was performed in accordance with ISO-178.
(3) Bending modulus:
The measurement was performed in accordance with ISO-178.
(4) Charpy impact strength:
The measurement was performed in accordance with JIS K7111.
(5) Crystallization temperature during cooling (Tc2N and Tc2M):
Using a differential scanning calorimeter (DSC), each of the samples in a dry state with a water content of 0.03 mass% or less was encapsulated in the DSC device for the measurement kept from fluctuation caused by water content. In other words, the top temperature of crystallization peak of a thermogram was obtained by heating to 300°C at a heating rate of 20°C/min under a nitrogen stream, holding the temperature for 5 minutes, and then lowering the temperature to 100°C at a rate of 10°C/min.
(6) 1 mm t Flow length:
Using a mold for evaluating flow length having a flow path with a width of 10 mm and a thickness of 1 mm, 20 shots of injection molding were continuously performed in a cycle of 30 s at an injection pressure of 100 MPa, a cylinder temperature of 275°C, and a mold temperature of 90°C, and the flow length was measured at the 20th shot.
(7) Number average fiber length (Ln) and weight average fiber length (Lw):
The residual glass fiber length in the inorganic material-reinforced thermoplastic polyester resin composition was measured by the following method.

In a material highly filled with glass fibers, glass fibers are easily damaged during measurement due to a lot of interference among the glass fibers, so that the accurate fiber length is hardly obtained. Therefore, in the present invention, a pellet obtained by melt-kneading for accurate measurement of the glass fiber length was ignited at 650°C for 2 hours for extraction of the glass fibers as ash without damaging the glass fibers. The resulting glass fibers were immersed in water, and the dispersed glass fibers were taken out on a preparation. Randomly selected 1000 or more pieces of glass fibers were observed at a magnification power of 80 with a digital microscope (KH-7700 manufactured by Hirox Co., Ltd.) to determine the number average fiber length and the weight average fiber length, respectively. Weight average fiber length (Lw) may be calculated by the following equation, wherein (Ni) is the number of fibers having circumference ratio ($\pi$), fiber length (Li), density ($\rho$i), and fiber diameter (ri).

$$Lw = \Sigma(Ni \times \pi \times ri^2 \times Li^2 \times \rho i) / \Sigma(Ni \times \pi \times ri^2 \times Li \times \rho i)$$

In the case where the fiber diameter and density are constant, Lw may be calculated by the following equation.

$$Lw = \Sigma(Ni \times Li^2) / \Sigma(Ni \times Li)$$

(8) Number of peaks of fiber length histogram:

The number of peaks (classes higher than the left and right classes) of a histogram created by dividing the glass fiber length measured in (7) into classes separated by every 50 $\mu$m (0 to 50 $\mu$m, 50 to 100 $\mu$m, hereafter, at the same pitch) was defined as the number of peaks of the histogram.

(9) Number average molecular weight Mn and weight average molecular weight Mw of resin component

A sample was weighed to have a resin component concentration of approximately 0.05 mass%, dissolved in 0.4 ml of chloroform/HFIP=3/2 (v/v), then diluted with 7.6 ml of chloroform, and filtered with a 0.2 $\mu$m membrane filter. The resulting sample solution was subjected to GPC analysis under the following conditions. The molecular weight was calculated in terms of standard polystyrene.

   Apparatus: TOSOH HLC-8320GPC
   Column: SKGel SuperHM-H (2 pieces) and TSKGel SuperH2000 (TOSOH) connected in series
   Solvent: chloroform/HFIP98/2 (v/v)
   Flow rate: 0.6 ml/min, Concentration: 0.05%
   Amount Injected: 20 $\mu$l, Temperature: 40°C, Detector: UV 254 nm

(10) Appearance of molding A

Using a textured plate mold having a length of 100 mm, a width of 100 mm and a thickness of 2 mm, injection molding was performed with an injection molding machine at a resin temperature of 275 to 280°C and a mold temperature of 90°C. The resulting molding was visually observed for the following evaluation.

   O : Good appearance with no appearance defect such as floating of glass fiber and texture displacement observed on the surface of the molding at all.
   $\Delta$ : Floating of glass fiber is observed at the end face of a molding distant from the gate.
   X : Poor surface gloss with floating of glass fiber observed on the whole of a molding.

(11) Appearance of molding B

A molding in a strip shape having a width of 18 mm, a length of 180 mm and a thickness of 2 mm was injection molded at a cylinder temperature of 275 to 280°C and a mold temperature of 90°C in an injection speed range with a filling time of 1.6 seconds, and the appearance thereof (floating of glass fiber and sink marks) was visually observed.

   O : Good appearance with no appearance defect such as floating of glass fiber, sink marks and defects caused by jetting observed on the surface.
   $\Delta$ : In a part (particularly at an end of a molding), some appearance defects occur.

X : Appearance defects easily identified by visual observation occur.

XX : In addition to the appearance defects easily identified by visual observation, short shot is observed in part.

(12) Warp deformation of molding C:

Using a film gate mold with ribs on one side, having a length of 100 mm, a width of 100 mm and a thickness of 2 mm, a molding C having five ribs having a length of 100 mm in the vertical direction to the resin flow direction, a height of 1 mm and a thickness of 1 mm was molded at a resin temperature of 275 to 280°C and a mold temperature of 80°C with an injection molding machine, and the amount of warp deformation thereof was measured. In the same manner, molding C was molded at the mold temperatures of 100°C and 120°C, and the amount of warp deformation thereof was measured. The amount of warp deformation is the value of A in Fig. 1, and the average value of three moldings having different mold temperatures was adopted for the evaluation according to the following criteria.

X : Amount of warp deformation>3 mm

Δ : 3 mm≧Amount of warp deformation≧2 mm

O : Amount of warp deformation<2 mm

(13) Warp deformation of molding D

A molding D was molded in the same manner as in item (12), except that a film gate mold with ribs on one side, having a length of 100 mm, a width of 100 mm and a thickness of 1.5 mm, was used, and the amount of warp deformation was measured for the evaluation according to the same criteria.

The raw materials used in Examples and Comparative Examples are as follows.

(A) Polybutylene terephthalate resin:

Manufactured by Toyobo Co., Ltd., reduced viscosity: 0.70 dL/g

(B) Polyethylene terephthalate resin:

Manufactured by Toyobo Co., Ltd., reduced viscosity: 0.72 dL/g

(C) Semicrystalline resin and/or amorphous resin:

(C1) Copolymerized polyethylene terephthalate resin:

Copolymer with composition ratio TPA//EG/NPG=100//70/30 (mol%), manufactured by Toyobo Co., Ltd., reduced viscosity: 0.83 dL/g

(C2) Copolymerized polyethylene terephthalate resin:

Copolymer with composition ratio TPA/IPA//EG/NPG=50/50//50/50 (mol%), manufactured by Toyobo Co., Ltd., reduced viscosity 0.53 dL/g

(The abbreviations indicate the followings, respectively. TPA: terephthalic acid, IPA: isophthalic acid, EG: ethylene glycol, NPG: neopentyl glycol component)

(C3) Polycarbonate:

"CALIBRE 301-40" manufactured by Sumika Styron Polycarbonate Ltd., melt volume rate (300°C, load: 1.2kg): 40 $cm^3$/10 min

(D) Inorganic reinforcing material

(D1) Glass fiber

T-127H manufactured by Nippon Electric Glass Co., Ltd., average fiber length: 3 mm, average fiber diameter: 11 μm

Transesterification inhibitor:

ADEKA STAB AX-71 manufactured by ADEKA Corporation

Other Additives:

Antioxidant: Irganox 1010 manufactured by BASF Japan Ltd.

Mold release agent: LICOLUB WE40 manufactured by Clariant Japan K.K.

Black pigment: ABF-T-9534 manufactured by Resino Color Industry Co., Ltd.

Examples 1 to 3, and 5 to 9, Comparative Examples 1, 2 and 5

In the method for producing the inorganic material-reinforced thermoplastic polyester composition of Examples and Comparative Examples, the above raw materials are weighed according to the blending ratio (parts by mass) shown in Table 1, and melt-kneaded with a twin-screw extruder (TEX44α, manufactured by Japan Steel Works, Ltd.) having a main feeder disposed at a first barrel from the upstream side of the extruder, a first side feeder disposed at a fifth barrel, and a second side feeder at a ninth barrel, with L/D=49 (number of barrels: 17), at a cylinder temperature of 260°C and a screw rotation speed of 300 rpm. The raw materials other than the inorganic reinforcing material were fed into the twin-screw extruder from a hopper of the main feeder, and the inorganic reinforcing material was fed from the main feed or the side feed in the amount shown in Table 1.

The resulting pellets of the inorganic material-reinforced thermoplastic polyester resin composition were dried to have a water content of 800 ppm or less, and then subjected to various molding and evaluation described above. Each evaluation sample was molded by an injection molding machine.

The molding conditions were as follows. In the case where the reinforcing material content was less than 40 parts by mass, the cylinder temperature was set to 275°C, while in the case where the reinforcing material content was 40 parts by mass or more, the cylinder temperature was set to 280°C. The evaluation results are shown in Table 1.

Example 4 and Comparative Examples 3 and 4

Melt kneading, molding, and evaluation were performed in the same manner as in Example 1, except that the cylinder temperature of the twin-screw extruder was changed to 275°C and the screw rotation speed was changed to 550 rpm.

Example 10

Melt kneading, molding, and evaluation were performed in the same manner as in Example 1, except that the first side feeder was disposed at the seventh barrel.

In both Examples and Comparative Examples, an inorganic material-reinforced thermoplastic polyester resin composition containing no semicrystalline resin and/or amorphous resin (C) was prepared for measurement of Tc2N.

[Table 1]

| | Type | Unit | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Composition | Polybutylene terephthalate resin (A) | Part by mass | 43 | 27 | 27 | 27 | 27 | 27 | 27 | 27 | 24 | 27 | 27 | 27 | 27 | 27 | 27 |
| | Polyethylene terephthalate resin (B) | Part by mass | 15 | 6 | 6 | 6 | 6 | 6 | 6 | 6 | 5 | 6 | 6 | 6 | 6 | 6 | 18 |
| | Copolymerized polyethylene terephthalate resin (C1) | Part by mass | | | | | 12 | | | | | | | | | | |
| | Copolymerized polyethylene terephthalate resin (C2) | Part by mass | 12 | 12 | 12 | 12 | | 8 | 12 | 12 | 11 | 12 | 12 | 12 | 12 | 12 | |
| | Polycarbonate (C3) | Part by mass | | | | | | 4 | | | | | | | | | |
| | Glass fiber (D1) | Part by mass | 30 | 55 | 55 | 55 | 55 | 55 | 55 | 55 | 60 | 55 | 55 | 55 | 55 | 55 | 55 |
| | Transesterification inhibitor | Part by mass | | | | | | 0.1 | | | | | | | | | |
| (D1) supply | Main feeder | Part by mass | | | | | | | 20 | 15 | | | | | | | |
| | First side feeder | Part by mass | 10 | 30 | 10 | 30 | 10 | 30 | | 10 | 30 | 55* | | 55 | 55 | | 25 |
| | Second side feeder | Part by mass | 20 | 25 | 45 | 25 | 45 | 25 | 35 | 30 | 30 | | 55 | | | 55 | 20 |
| Characteristics of molding | Number average fiber length Ln | μm | 260 | 210 | 465 | 210 | 465 | 210 | 170 | 140 | 185 | 175 | 530 | 96 | 96 | 530 | 210 |
| | Weight average fiber length Lw | μm | 320 | 290 | 550 | 290 | 590 | 290 | 360 | 310 | 270 | 235 | 600 | 108 | 108 | 600 | 290 |
| | Lw/Ln | - | 1.2 | 1.4 | 1.2 | 1.4 | 1.3 | 1.4 | 2.1 | 2.2 | 1.5 | 1.3 | 1.1 | 1.1 | 1.1 | 1.1 | 1.4 |
| | Number of peaks of fiber length histogram | - | 1 | 1 | 1 | 1 | 1 | 1 | 2 | 1 | 1 | 1 | 1 | 1 | 1 | 1 | 1 |
| | Number average molecular weight of resin component Mn | g/mol | 13000 | 13000 | 13000 | 10000 | 13000 | 14000 | 13000 | 13000 | 13000 | 13000 | 13000 | 13000 | 10000 | 10000 | 13000 |
| | Weight average molecular weight of resin component Mw | g/mol | 57000 | 57000 | 57000 | 71000 | 57000 | 61000 | 57000 | 57000 | 57000 | 57000 | 57000 | 57000 | 71000 | 71000 | 57000 |
| | Mw/Mn | - | 4.4 | 4.4 | 4.4 | 7.1 | 4.4 | 4.4 | 4.4 | 4.4 | 4.4 | 4.4 | 4.4 | 4.4 | 7.1 | 7.1 | 4.4 |
| | Crystallization temperature during cooling Tc2N | °C | 196 | 196 | 196 | 196 | 196 | 196 | 196 | 196 | 196 | 196 | 196 | 196 | 205 | 196 | 195 |
| | Crystallization temperature during cooling Tc2M | °C | 181 | 175 | 175 | 175 | 178 | 182 | 175 | 175 | 175 | 175 | 175 | 175 | 174 | 175 | 195 |
| | Tc2N-Tc2M | °C | 15 | 21 | 21 | 21 | 18 | 14 | 21 | 21 | 21 | 21 | 21 | 21 | 31 | 21 | 0 |
| | Bending strength | MPa | 202 | 248 | 255 | 220 | 256 | 250 | 243 | 244 | 265 | 245 | 258 | 190 | 150 | 258 | 250 |
| | Bending modulus | GPa | 10.4 | 18.5 | 18.5 | 18.3 | 18.5 | 18.6 | 18.5 | 18.5 | 20.5 | 18.5 | 18.5 | 18.5 | 18.2 | 18.2 | 18.5 |
| | Sharpy impact strength | KJ/m² | 9.4 | 14.0 | 14.7 | 14.2 | 14.8 | 14.0 | 13.2 | 13.4 | 16.3 | 13.8 | 15.1 | 11.0 | 9.8 | 15.1 | 14.2 |
| | 1 mm t Flow length (275°C, 100 MPa) | mm | 310 | 160 | 125 | 123 | 124 | 145 | 170 | 160 | 114 | 165 | 75 | 210 | 155 | 45 | 85 |
| | Appearance of molding A | - | O | O | O | O | O | O | O | O | O | O | O | O | O | O | X |
| | Appearance of molding B | - | O | O | O | Δ | O | Δ | Δ | Δ | O | Δ | X | Δ | Δ | XX | X |
| | Warp deformation of molding C | - | O | O | O | O | O | O | O | O | O | O | O | O | O | O | X |
| | Warp deformation of molding D | - | O | O | O | Δ | O | Δ | Δ | O | O | O | X | O | Δ | X | X |

(Note 1) Composition is expressed in parts by mass (Total amount of A to D components is 100 parts by mass).

Relative to the total amount of the components A to D (parts by mass), 0.2 parts by mass of stabilizer (antioxidant), 0.8 parts by mass of mold release agent, and 1.0 part by mass of black pigment are contained.

(Note 2) The first side feeder marked with * is positioned at 7th barrel, and others are positioned at 5th barrel.

INDUSTRIAL APPLICABILITY

Use of the inorganic material-reinforced thermoplastic polyester resin composition of the present invention allows a long and thin molding excellent in appearance to be produced while maintaining proper mechanical properties such as rigidity and impact resistance. Accordingly, the molding may be used in a wide range of fields such as blowing fins of air conditioners, interior parts and exterior parts of automobiles, and housing parts and housings that require high rigidity to accommodate various mechanical elements. Therefore, the resin composition of the present invention contributes to the industrial application.

REFERENCE SIGNS LIST

L: Flow direction of resin composition
W: Direction perpendicular to flow of resin composition

1: Molding
2: Film gate
3: Rib
A: Warp deformation

**Claims**

1. An inorganic material-reinforced thermoplastic polyester resin composition, comprising 20 to 55 parts by mass of a polybutylene terephthalate resin (A), 1 to 30 parts by mass of a polyethylene terephthalate resin (B), 3 to 30 parts by mass of a semicrystalline resin and/or amorphous resin (C), and 25 to 65 parts by mass of an inorganic reinforcing material (D),

   wherein the inorganic reinforcing material (D) in the inorganic material-reinforced thermoplastic polyester resin composition has a number average fiber length Ln of 100 to 500 $\mu$m,
   wherein the inorganic material-reinforced thermoplastic polyester resin composition has a flow length of 80 mm or more, and a crystallization temperature during cooling (Tc2M) as measured by differential scanning calorimetry (DSC) that satisfies: 160°C$\leq$Tc2M<185°C,
   wherein the semicrystalline resin and/or amorphous resin (C) is at least one of the group consisting of a copolymerized polybutylene terephthalate, a copolymerized polyethylene terephthalate, and a polycarbonate-based resin, and
   wherein the number average fiber length Ln, the flow length, and the crystallization temperature during cooling (Tc2M) are determined as indicated in the description.

2. The inorganic material-reinforced thermoplastic polyester resin composition according to claim 1, wherein the semicrystalline resin and/or amorphous resin (C) is one or more selected from the group consisting of a terephthalic acid//ethylene glycol/neopentyl glycol copolymer, a terephthalic acid//ethylene glycol/1,2-propane diol copolymer, and a terephthalic acid/isophthalic acid//ethylene glycol/neopentyl glycol copolymer.

3. The inorganic material-reinforced thermoplastic polyester resin composition according to claim 1 or 2, satisfying the following relation:

$$Tc2N - Tc2M \geq 10°C$$

   wherein the crystallization temperature during cooling of a polyester resin composition excluding only the semicrystalline resin and/or amorphous resin (C) in the inorganic material-reinforced thermoplastic polyester resin composition is represented by Tc2N (°C) as measured by differential scanning calorimetry (DSC), and
   wherein the crystallization temperature during cooling (Tc2N) of a polyester resin composition excluding only the semicrystalline resin and/or amorphous resin (C) is determined as indicated in the description.

4. The inorganic material-reinforced thermoplastic polyester resin composition according to any of claims 1 to 3, wherein a weight average molecular weight Mw and a number average molecular weight Mn of the resin component of the inorganic material-reinforced thermoplastic polyester resin composition satisfy: Mw/Mn$\leq$5, wherein the weight average molecular weight Mw and the number average molecular weight Mn are determined as indicated in the description.

5. The inorganic material-reinforced thermoplastic polyester resin composition according to any of claims 1 to 4, wherein the content of inorganic reinforcing material (D) in the inorganic material-reinforced thermoplastic polyester resin composition is 40 to 60 mass%.

6. The inorganic material-reinforced thermoplastic polyester resin composition according to any of claims 1 to 5, wherein a number average fiber length Ln and a weight average fiber length Lw of the inorganic reinforcing material (D) in the inorganic material-reinforced thermoplastic polyester resin composition satisfy:

$$Lw/Ln \leq 2.0,$$

wherein the weight average fiber length Lw is determined as indicated in the description.

7. A production method of the inorganic material-reinforced thermoplastic polyester resin composition according to any of claims 1 to 6, comprising using a twin-screw extruder having a plurality of side feeders and separately feeding the same type of inorganic reinforcing material from the side feeders.

**Patentansprüche**

1. Mit anorganischem Material verstärkte thermoplastische Polyesterharzzusammensetzung, umfassend 20 bis 55 Masseteile eines Polybutylenterephthalatharzes (A), 1 bis 30 Masseteile eines Polyethylenterephthalatharzes (B), 3 bis 30 Masseteile eines teilkristallinen Harzes und/oder amorphen Harzes (C) und 25 bis 65 Masseteile eines anorganischen Verstärkungsmaterials (D),

   wobei das anorganische Verstärkungsmaterial (D) in der mit anorganischem Material verstärkten thermoplastischen Polyesterharzzusammensetzung eine zahlengemittelte Faserlänge Ln von 100 bis 500 $\mu$m aufweist,
   wobei die mit anorganischem Material verstärkte thermoplastische Polyesterharzzusammensetzung eine Fließlänge von 80 mm oder mehr und eine Kristallisationstemperatur während Abkühlung (Tc2M), gemessen mittels dynamischer Differenzkalorimetrie (DSC), die erfüllt: 160 °C ≤ Tc2M < 185 °C, aufweist, wobei das teilkristalline Harz und/oder amorphe Harz (C) mindestens eines, aus der Gruppe, bestehend aus einem copolymerisierten Polybutylenterephthalat, einem copolymerisierten Polyethylenterephthalat und einem Polycarbonat-basierenden Harz, ist, und
   wobei die zahlengemittelte Faserlänge Ln, die Fließlänge und die Kristallisationstemperatur während Abkühlung (Tc2M) wie in der Beschreibung angegeben bestimmt werden.

2. Mit anorganischem Material verstärkte thermoplastische Polyesterharzzusammensetzung gemäß Anspruch 1, wobei das teilkristalline Harz und/oder amorphe Harz (C) eines oder mehrere, ausgewählt aus der Gruppe, bestehend aus einem Terephthalsäure//Ethylenglykol/Neopentylglykol-Copolymer, einem Terephthalsäure//Ethylenglykol/1,2-Propandiol-Copolymer und einem Terephthalsäure/Isophthalsäure//Ethylenglykol/Neopentylglykol-Copolymer, ist.

3. Mit anorganischem Material verstärkte thermoplastische Polyesterharzzusammensetzung gemäß Anspruch 1 oder 2, die das folgende Verhältnis erfüllt:

$$Tc2N - Tc2M \geq 10°C$$

   wobei die Kristallisationstemperatur während Abkühlung einer Polyesterharzzusammensetzung, die nur das teilkristalline Harz und/oder amorphe Harz (C) ausschließt, in der mit anorganischem Material verstärkten thermoplastischen Polyesterharzzusammensetzung durch Tc2N (°C) dargestellt wird, die mittels dynamischer Differenzkalorimetrie (DSC) gemessen wird, und
   wobei die Kristallisationstemperatur während Abkühlung (Tc2N) einer Polyesterharzzusammensetzung, die nur das teilkristalline Harz und/oder amorphe Harz (C) ausschließt, wie in der Beschreibung angegeben bestimmt wird.

4. Mit anorganischem Material verstärkte thermoplastische Polyesterharzzusammensetzung gemäß einem der Ansprüche 1 bis 3, wobei ein gewichtsgemitteltes Molekulargewicht Mw und ein zahlengemitteltes Molekulargewicht Mn der Harzkomponente der mit anorganischem Material verstärkten thermoplastischen Polyesterharzzusammensetzung erfüllt: Mw/Mn ≤ 5, wobei das gewichtsgemittelte Molekulargewicht Mw und das zahlengemittelte Molekulargewicht Mn wie in der Beschreibung angegeben bestimmt werden.

5. Mit anorganischem Material verstärkte thermoplastische Polyesterharzzusammensetzung gemäß einem der Ansprüche 1 bis 4, wobei der Gehalt von anorganischem Verstärkungsmaterial (D) in der mit anorganischem Material verstärkten thermoplastischen Polyesterharzzusammensetzung 40 bis 60 Massen-% beträgt.

6. Mit anorganischem Material verstärkte thermoplastische Polyesterharzzusammensetzung gemäß einem der Ansprüche 1 bis 5, wobei eine zahlengemittelte Faserlänge Ln und eine gewichtsgemittelte Faserlänge Lw des anorganischen Verstärkungsmaterials (D) in der mit anorganischem Material verstärkten thermoplastischen Polyesterharzzusammensetzung erfüllt: Lw/Ln ≤ 2,0,
   wobei die gewichtsgemittelte Faserlänge Lw wie in der Beschreibung angegeben bestimmt wird.

7.  Herstellungsverfahren der mit anorganischem Material verstärkten thermoplastischen Polyesterharzzusammensetzung gemäß einem der Ansprüche 1 bis 6, umfassend Verwenden eines Doppelschneckenextruders mit einer Vielzahl von Seitenzuführungen und separates Zuführen desselben Typs von anorganischem Verstärkungsmaterial aus den Seitenzuführungen.

## Revendications

1.  Composition de résine de polyester thermoplastique renforcée par un matériau inorganique, comprenant 20 à 55 parties en masse d'une résine de polybutylène téréphtalate (A), 1 à 30 parties en masse d'une résine de polyéthylène téréphtalate (B), 3 à 30 parties en masse d'une résine semi-cristalline et/ou d'une résine amorphe (C), et 25 à 65 parties en masse d'un matériau de renforcement inorganique (D),

    dans laquelle le matériau de renforcement inorganique (D) dans la composition de résine de polyester thermoplastique renforcée par un matériau inorganique a une longueur moyenne de fibre en nombre Ln de 100 à 500 μm,
    dans laquelle la composition de résine de polyester thermoplastique renforcée par un matériau inorganique a une longueur d'écoulement de 80 mm ou plus, et une température de cristallisation pendant le refroidissement (Tc2M), telle que mesurée par calorimétrie à balayage différentiel (DSC), qui satisfait : 160 °C≤Tc2M<185 °C,
    dans laquelle la résine semi-cristalline et/ou la résine amorphe (C) est au moins l'une parmi le groupe constitué d'un polybutylène téréphtalate copolymérisé, d'un polyéthylène téréphtalate copolymérisé et d'une résine à base de polycarbonate, et
    dans laquelle la longueur moyenne de fibre en nombre Ln, la longueur d'écoulement et la température de cristallisation pendant le refroidissement (Tc2M) sont déterminées comme indiqué dans la description.

2.  Composition de résine de polyester thermoplastique renforcée par une matière inorganique selon la revendication 1, dans laquelle la résine semi-cristalline et/ou la résine amorphe (C) est une ou plusieurs résines choisies dans le groupe constitué d'un copolymère d'acide téréphtalique//éthylène glycol/néopentyl glycol, d'un copolymère d'acide téréphtalique//éthylène glycol/1,2-propane diol, et d'un copolymère d'acide téréphtalique/isophtalique//éthylène glycol/néopentyl glycol.

3.  Composition de résine de polyester thermoplastique renforcée par un matériau inorganique selon la revendication 1 ou 2, satisfaisant la relation suivante :

$$Tc2N - Tc2M \geq 10\ °C$$

    dans laquelle la température de cristallisation pendant le refroidissement d'une composition de résine de polyester excluant uniquement la résine semi-cristalline et/ou la résine amorphe (C) dans la composition de résine de polyester thermoplastique renforcée par un matériau inorganique est représentée par Tc2N (°C) telle que mesurée par calorimétrie à balayage différentiel (DSC), et
    dans laquelle la température de cristallisation pendant le refroidissement (Tc2N) d'une composition de résine de polyester excluant uniquement la résine semi-cristalline et/ou la résine amorphe (C) est déterminée comme indiqué dans la description.

4.  Composition de résine de polyester thermoplastique renforcée par un matériau inorganique selon l'une quelconque des revendications 1 à 3, dans laquelle une masse moléculaire moyenne en poids Mw et la masse moléculaire moyenne en nombre Mn du composant de résine de la composition de résine de polyester thermoplastique renforcée par un matériau inorganique satisfont : Mw/Mn≤5, dans laquelle la masse moléculaire moyenne en poids Mw et la masse moléculaire moyenne en nombre Mn sont déterminées comme indiqué dans la description.

5.  Composition de résine de polyester thermoplastique renforcée par un matériau inorganique selon l'une quelconque des revendications 1 à 4, dans laquelle la teneur en matière de renforcement inorganique (D) dans la composition de résine de polyester thermoplastique renforcée par un matériau inorganique est comprise entre 40 et 60 % en masse.

6.  Composition de résine de polyester thermoplastique renforcée par un matériau inorganique selon l'une quelconque des revendications 1 à 5, dans laquelle la longueur moyenne de fibre en nombre Ln et la longueur moyenne de fibre en poids Lw de la matière de renforcement inorganique (D) dans la composition de résine de polyester thermoplastique renforcée par un matériau inorganique satisfont : Lw/Ln≤2.0,
dans laquelle la longueur moyenne de fibre Lw est déterminé comme indiqué dans la description.

7. Procédé de production de la composition de résine de polyester thermoplastique renforcée par un matériau inorganique selon l'une quelconque des revendications 1 à 6, comprenant l'utilisation d'une extrudeuse à double vis ayant une pluralité de dispositifs d'alimentation latéraux et l'alimentation séparée du même type de matériau de renforcement inorganique à partir des alimentations latérales.

FIG.1

(a)

(b)

**EP 4 198 081 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5396690 B